# EUROPÄISCHE PATENTSCHRIFT

(11) **EP 0 659 379 B1**
(45) Veröffentlichungstag und Bekanntmachung des Hinweises auf die Patenterteilung: **05.03.1997**
(21) Anmeldenummer: 94710012.9
(22) Anmeldetag: 14.12.1994
(51) Int. Cl.: A47J 37/12

(54) **Friteuse**
Fryer
Friteuse

(30) Priorität: 15.12.1993 DE 4342727
(43) Veröffentlichungstag der Anmeldung: 28.06.1995
(73) Patentinhaber: NIRO-PLAN AG, CH-6300 Zug (CH)
(72) Erfinder: Batt, Gerhard, D-79249 Merzhausen (DE)
(74) Vertreter: Brommer, Hans Joachim, Dr.-Ing.

(56) Entgegenhaltungen:
- EP-A- 0 126 663
- EP-A- 0 135 707
- CH-A- 629 948
- DE-A- 3 602 021
- GB-A- 1 401 219
- NL-A- 9 101 807
- US-A- 5 184 539
- US-A- 5 223 154

## Beschreibung

Die Erfindung betrifft eine Friteuse mit einem Behälter für das Fritierfett, in den von oben ein Aufbewahrungsbehälter für das Fritiergut einsetzbar ist, sowie mit einem in dem Behälter angeordneten, sowohl oben als auch unten offenen Einsatz, der zwischen seinen beiden Seitenwänden und den gegenüberliegenden, beheizten Seitenwänden des Behälters jeweils einen Zwischenraum derart definiert, daß das Fritierfett in einer Zirkulationsbewegung in den beiden äußeren Zwischenräumen hochströmt sowie anschließend durch das Innere des Einsatzes wieder abwärtsströmt, und dem eine Filtereinrichtung mit Sieb zum Filtrieren des durchströmenden Fritierfetts zugeordnet ist.

Friteusen sind ein weit verbreitetes thermisches Gerät für die Zubereitung von Nahrungsmitteln. Diese werden dabei in der Friteuse in heißem Fett gebacken. Das bekannteste Beispiel dürften wohl die Pommes-frites sein.

In der EP-OS 0 135 707 ist eine Friteuse der eingangs angegebenen Art (vgl. Oberbegriff des Anspruchs 1) offenbart, bei der in der Ausführungsform gemäß Fig. 8 die Friteuse einen Behälter einerseits zur Aufnahme des Fritierfettes und andererseits zur Aufnahme eines Siebbehälters für das Fritiergut aufweist. Dabei ist der Behälterin eine untere Heiz- und Umwälzzone für das Fritierfett sowie in eine obere Fritierzone unterteilt. In der Heiz- und Umwälzzone im unteren, V-förmigen Bereich des Behälters befindet sich ein ebenfalls V-förmiger Einsatz. Seine beiden Seitenwände bilden mit den gegenüberliegenden Seitenwänden des Behälters jeweils einen kanaltörmigen Zwischenraum. Für den Fritiervorgang werden die Seitenwände des Behälters mittels Heizrohren beheizt, so daß der zuvor erwähnte Zwischenraum zwischen den Seitenwänden des Einsatzes einerseits und denSeitenwänden des Behälters andererseits bei Erwärmung eine Auftriebszone dergestalt bildet, daß das Fritierfett eine Aufwärtsströmung durchführt. Dadurch entsteht im unteren Bereich des Behälters am unteren, offenen Ende des Einsatzes eine Art Sog, welcher durch das Innere des oben ebenfalls offenen Einsatzes in einer Art Zirkulation vom Fritierbereich her Fritierfett ansaugt. Weiterhin ist dem unteren, offenen Ende des Einsatzes ein Siebkorb zugeordnet, welcher während der Abwärtsströmung im Einsatz Überreste aus dem Fritierfett herausfiltert.

Nachteilig bei dieser bekannten Friteuse ist, daß die Seitenwände des Behälters mittels der Heizrohre direkt beheizt werden. Daraus resultieren punktuelle Überhitzungen an der Heizfläche, was eine nachteilige Überhitzung des Fetts in diesem Bereich zur Folge hat. Weiterhin ist bei der bekannten Friteuse von Nachteil, daß der am unteren, offenen Ende des Einsatzes befindliche Siebkorb sich nach einer gewissen Zeit mit Überresten zusetzt, so daß die Zirkulation zum Erliegen kommt. Dies bedeutet, daß schon nach relativ kurzen Zeitabständen der Einsatz mit dem Siebkorb dem Friteusenbehälter entnommen und gereinigt werden muß.

Davon ausgehend liegt der Erfindung die **Aufgabe** zugrunde, eine Friteuse mit einer verbesserten Rückhalteeinrichtung für die Überreste zu schaffen.

Als technische **Lösung** wird mit der Erfindung vorgeschlagen, daß die Filtereinrichtung innerhalb des Einsatzes angeordnet ist und aus mehreren in Strömungsrichtung schikanenförmig hintereinander angeordneten Sieben besteht.

Dadurch wird eine optimal ausgebildete Friteuse hinsichtlich der Filtrierung des Fritierfetts zum Austrag der Überreste geschaffen. Bei der Nachuntenbewegung des Fritierfetts innerhalb des Einsatzes wird bei der Rückströmung gleichzeitig eine permanente Reinigung des zirkulierenden Fritierfettes mit einem sehr großen Wirkungsgrad erzielt, indem die im Fritierfett befindlichen Überreste herausgefiltert werden. Die schikanenförmige Anordnung der Siebe stellt eine wirkungsvolle Maßnahme dar, um die Überreste aus dem Rücklaufstrom des Fritierfetts abzusondern. Es gibt gewissermaßen zwei Möglichkeiten, um die Überreste zurückzuhalten. Zum einen werden die Überreste durch die Siebe ausgefiltert, zum anderen bewirken die Schikanen gewissermaßen eine Art Sperre für die Überreste, so daß sie von den Einzelsieben zurückgehalten werden. Die Schikanenwirkung wird insbesondere dann eintreten, wenn sich die Siebe schon zu einem großen Teil mit Überresten zugesetzt haben. In diesem Fall durchströmt das rücklaufende Fritierfett nicht mehr die Siebe, sondern es umströmt diese schikanenartig. Die schikanenförmige Anordnung der Siebe sieht vorzugsweise so aus, daß diese abwechselnd von der einen und von der anderen Seitenwand des Behälters ausgehen und sich jeweils in der Axialrichtung überlappend abwechseln. Der Einsatz bildet somit zusammen mit den schikanenartig angeordneten Sieben einen wirkungsvollen Siebeinsatz für die erfindungsgemäße Friteuse. Schließlich hat die erfindungsgemäße Friteuse den Vorteil, daß der Behälter glattwandig ausgebildet werden kann und sich somit optimale Pflegevoraussetzungen ergeben.

Zwar ist aus der US-A 5 223 154 die schikanenartige Anordnung von Filtern grundsätzlich bekannt. Dabei handelt es sich aber nicht um eine Friteuse, sondern um ein Auffangbecken, das für die Schadstoff-Verringerung bei Überschwemmungen gedacht ist.

Die Siebe sind vorzugsweise rinnenförmig ausgebildet. Diese Siebausbildung in Form von Wannen oder Halbrundschalen hat den Vorteil, daß sich die Überreste problemlos darin sammeln können. Sie werden sich dabei vorzugsweise im untersten Bereich der rinnenförmigen Siebe ansammeln, so daß eine Verstopfungsgefahr gering ist, da immer noch seitlich davon freie Siebfläche zur Verfügung steht, es sei denn, die Siebe sind vollständig mit Überresten gefüllt.

Alternativ ist es auch möglich, daß die Siebe eben ausgebildet und insbesondere dabei bezüglich der Horizontalen zur Seitenwand hin nach unten geneigt sind. Außer der zuvor beschriebenen halbrunden Form der Siebe ist mit diesen Siebplatten oder Filterplatten gleichermaßen eine Ausfiltrierung der im Fritierfett enthaltenen Überreste möglich. Diese vorzugsweise schräggestellten, ebenen Siebe bilden dabei gewissermaßen zusammen mit der Seitenwand des Behälters eine Art trichterförmige Rinne, in der sich die Überreste im unteren Bereich sammeln.

Eine weitere bevorzugte Weiterbildung der erfindungsgemäßen Friteuse schlägt vor, daß der Einsatz mit der Filtereinrichtung als separates Bauteil in den Behälter einsetzbar und herausnehmbar ist. Dies bringt den Vorteil mit sich, daß für Reinigungszwecke des Einsatzes dieser auf einfache Weise aus dem Behälter herausgenommen und anschließend beispielsweise mittels einer Schlauchbrause gereinigt oder in eine Spülmaschine gestellt werden kann.

Schließlich wird in einer Weiterbildung vorgeschlagen, daß der Behälter im Bereich des Einsatzes V-förmig oder U-förmig ausgebildet ist. Dies ergibt optimale Zirkulationsverhältnisse für das Fritierfett innerhalb des Behälters, insbesondere auch hinsichtlich der Filtereinrichtung eine optimale Anordnung innerhalb des Einsatzes. Da bei der V-Form im oberen Bereich des Einsatzes die Mündungen der Zwischenräume relativ weit auseinanderliegen, resultiert daraus eine optimale Durchströmung des Fritierraumes mittels des umgewälzten Fritierfettes. Durch die unterseitige konische Verjüngung des Einsatzes wird darüber hinaus ein optimaler Sog für die Fritierfettumwälzung erzeugt.

Eine weitere Weiterbildung der erfindungsgemäßen Friteuse schlägt vor, daß der Behälter einen rechteckigen oder einen runden Querschnitt aufweist. Unter dem "Querschnitt" ist dabei ein Horizontalschnitt durch die Mittelsenkrechte der Friteuse zu verstehen. Bei beiden Querschnittsformen ist selbstverständlich der Einsatz entsprechend angepaßt und weist eine entsprechende Querschnittsform auf. Bei der runden Querschnittsform des Behälters und damit des Einsatzes sind die Siebe vorzugsweise kreisförmig ausgebildet, wobei sich Siebringe mit runden Siebplatten alternativ abwechseln.

Eine weitere Weiterbildung schlägt vor, daß zum berührungslosen Beheizen der beiden Seitenwände des Behälters von außen Infrarotstrahlung verwendet wird, welche von den Seitenwänden unter Wärmeerzeugung absorbiert wird. Die Infrarotstrahlung strahlt dabei auf die seitlichen Behälterwände und wird dabei in Wärme umgewandelt. Diese Wärme verteilt sich gleichmäßig über die gesamte Behälterwandung und heizt diese gleichmäßig auf. Der Behälter ist somit gewissermaßen mit seiner Heiz- und Umwälzzone in die Infrarotstrahlung eingetaucht und wird damit in der Gesamtheit zum Wärmetauscher für das Fritierfett mit einer besonders großen Wärmetauschfläche. Dabei ist die spezifische Oberflächenbelastung besonders niedrig, nämlich beispielsweise 3,5 W/cm². Es können sich somit keine punktuellen Überhitzungen an der Heizfläche aufbauen, so daß das Fritierfett bestmöglich geschont wird. Die Behälterwand heizt sich gleichmäßig auf, und die entsprechende Wärme wird an das im Behälter befindliche Fritierfett unter thermischer Umwälzung gleichmäßig und schonend abgegeben. Die Infrarotstrahlung kann auf technisch einfache Weise durch eine Infrarotlampe, insbesondere eine Infrarothalogenlampe erzeugt werden, und es ist somit auf technisch einfache und beherrschbare Weise möglich, die Behälterseitenwände aufzuheizen. Als Heizelemente können dabei beispielsweise Heizrohre dienen, welche einen gewissen Abstand von den Behälterseitenwänden aufweisen, so daß kein direkter mechanischer Kontakt besteht. Vielmehr senden diese Heizrohre elektromagnetische Strahlung in Form der Infrarotstrahlung ab, welche von den Seitenwänden des Behälters absorbiert wird.

Zur Erzeugung der Infrarotstrahlung sind vorzugsweise Infrarotlampen, Heizrohre oder Gasbrenner vorgesehen.

Die Außenseiten der Seitenwände des Behälters sind vorzugsweise geschwärzt. Dadurch wird die Infrarotstrahlung nahezu vollständig absorbiert und somit ein sehr großer Wirkungsgrad erzielt.

Eine weitere Weiterbildung schlägt vor, daß Reflektoren zum Reflektieren der ausgesandten Infrarotstrahlung hin zu den Seitenwänden des Behälters vorgesehen sind. Diese Reflektoren, welche entsprechend als Hohlspiegel ausgebildet sein können, bewirken, daß nahezu die ganze emittierte Infrarotstrahlung auf die Seitenwände des Behälters gelangen und somit mit minimaler Heizleistung eine maximale Aufheizung der Behälterseitenwände erzielt wird.

Schließlich wird in einer Weiterbildung als Alternative zur Infrarotstrahlung vorgeschlagen, daß zum Beheizen der beiden Seitenwände des Behälters Heizmatten vorgesehen sind. Diese Heizmatten, welche auf den Seitenwänden des Behälters aufgelegt sind, bewirken eine großflächige Beheizung der Seitenwand, so daß ebenso wie bei der Infrarotstrahlung das Fritierfett schonend erhitzt wird. Sowohl die Infrarotbeheizung der Seitenwände als auch die Beheizung mittels Heizmatten hat den Vorteil, daß die Zirkulationsströmung des. Fritierfettes positiv beeinflußt und somit auch die Wirkung des Siebeinsatzes optimiert wird, da die Beheizung des Fritierfettes einen Einfluß auf die Siebwirkung hat.

Ein Ausführungsbeispiel einer erfindungsgemäßen Friteuse wird nachfolgend anhand der Zeichnungen beschrieben. In diesen zeigt:
- Fig. 1: eine schematische Seitenansicht der Friteuse;
- Fig. 2: eine perspektivische Ansicht der Friteuse in einer Art Schnittdarstellung von vorne;

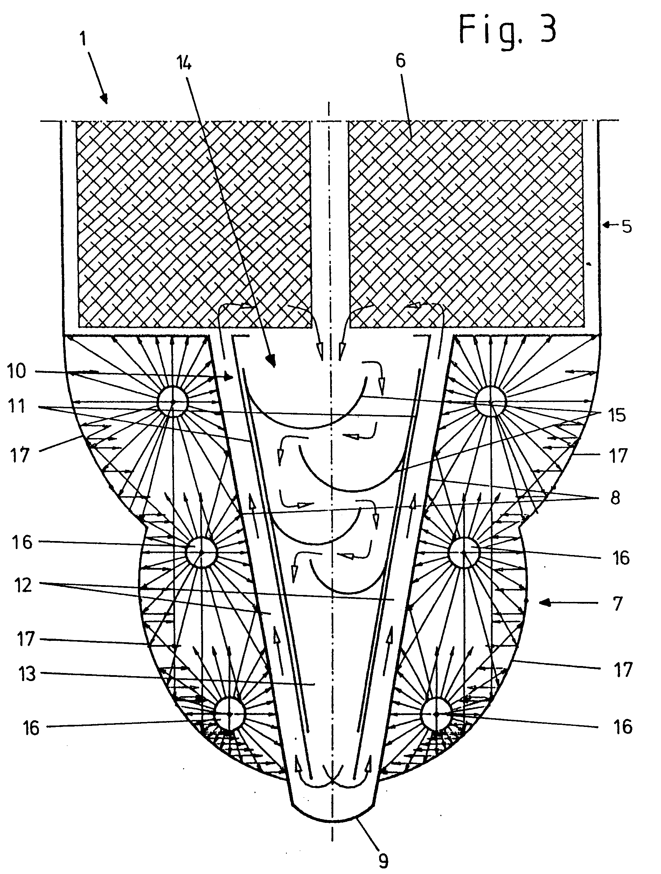

- Fig. 3: in einer detaillierteren Darstellung den eigentlichen Behälter der Friteuse in einer Art Querschnittsdarstellung,
- Fig. 4: eine etwas modifizierte Ausführungsform mit schräggestellen, ebenen Sieben entsprechend der Darstellung wie in Fig. 3.

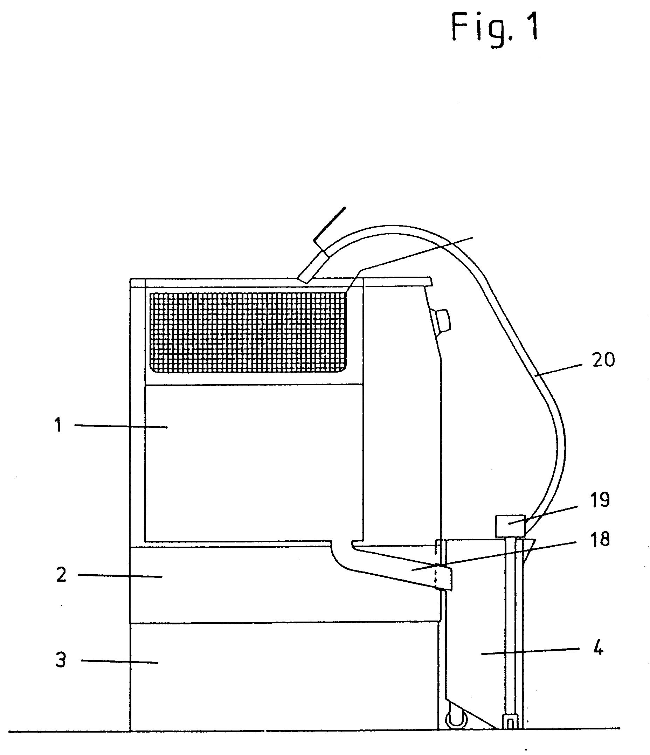

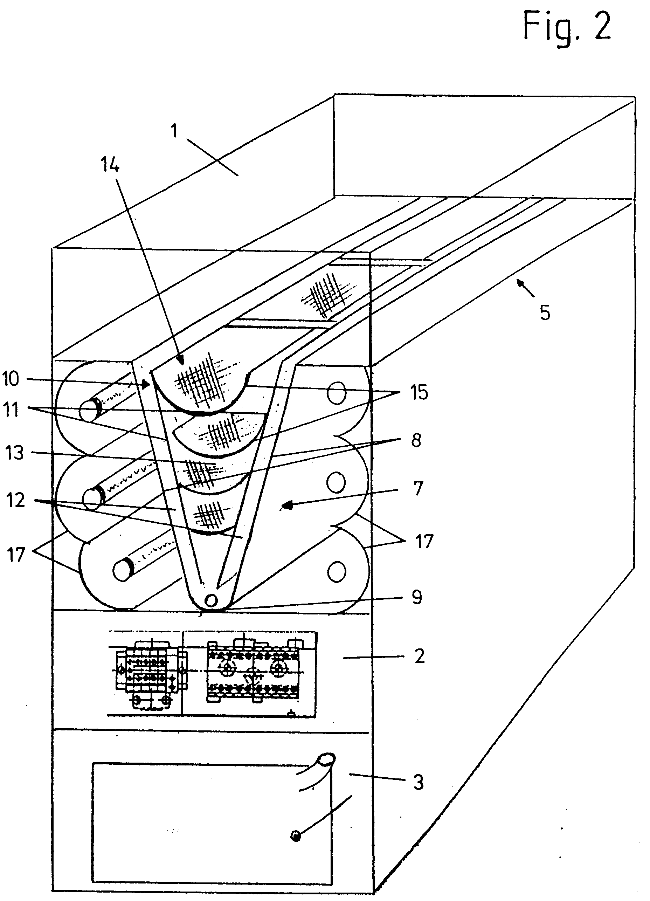

Die Friteuse, wie sie in den Fig. 1 und 2 in ihrer Gesamtheit dargestellt ist, weist oben einen Behälter 1 für den eigentlichen Fritiervorgang, in der Mitte ein Installationsfach 2 für die Verkabelung sowie für sämtliche elektrische Steuerteile sowie ganz unten ein Staufach für einen Öltank 4 auf.

Der Behälter 1 weist oben einen quarderförmigen Abschnitt auf und definiert eine Fritierzone 5, in die ein Aufbewahrungsbehälter 6 in Form eines Siebbehälters für das Fritiergut von oben einsetzbar ist. Der untere Bereich des Behälters 1 läuft nach unten hin konisch zu und definiert eine Heiz- und Umwälzzone für das im Behälter 1 befindliche Fritierfett. Dieser untere Bereich des Behälters 1 wird durch zwei V-förmig geneigte Seitenwände 8 begrenzt, welche unterseitig durch einen Rundbogen 9 miteinander verbunden sind.

In dem unteren konusförmigen Bereich des Behälters 1 für die Heiz- und Umwälzzone 7 ist von oben ein ebenfalls V-förmiger Einsatz 10 eingesetzt, dessen Seitenwände 11 zu den Seitenwänden 8 des Behälters 1 einen konstanten Abstand von ungefähr 3 cm aufweisen, so daß zwischen den zueinander parallelen Seitenwänden 8, 11 jeweils ein Zwischenraum 12 definiert ist. Der im Querschnitt V-förmige Einsatz 10 ist sowohl oben als auch unten offen und weist im Innern 13 eine Filtereinrichtung 14 auf. Diese ist durch wannenförmige Siebe 15 gebildet, welche sich längs des Einsatzes 10 erstrecken und dabei übereinander innerhalb des Einsatzes 10 derart angeordnet sind, daß sie abwechselnd von der einen und von der anderen Seitenwand 11 des Einsatzes 10 ausgehen und sich dabei in Achsrichtung gesehen überlappen. Die Siebe 15 definieren dabei in dieser besonderen Anordung Schikanen.

Außerhalb des Behälters 1 befinden sich im Bereich der Heiz- und Umwälzzone 7 auf jeder Seite drei Heizrohre 16 welche infrarote Wärmestrahlung abgeben. Dabei sind weiterhin hohlspiegelartige Reflektoren 17 vorgesehen.

Die so ausgebildete Friteuse funktioniert wie folgt:

Zum Betrieb der Friteuse muß das in dem Behälter 1 befindliche Fritierfett erhitzt werden. Zu diesem Zweck werden die Heizrohre 16 beheizt, indem sie infrarote Wärmestrahlung abgeben. Diese infrarote Wärmestrahlung gelangt dabei auf die Außenseiten der Seitenwände 8 des Behälters 1, die zu diesem Zweck geschwärzt sind und die Infrarotstrahlung absorbieren und in Wärme umwandeln. Die von den Heizrohren 16 nach außen hin emittierte Infrarotstrahlung wird dabei durch die Reflektoren 17 reflektiert und ebenfalls auf die Außenseite der Seitenwände 8 des Behälters 1 gelenkt. Die spezifische Heizleistung der Seitenwände 8 des Behälters 1 liegt dabei bei ungefähr 3,5 Watt/cm².

Die beheizten Seitenwände 8 des Behälters 1 geben ihre Wärme an das in den Zwischenräumen 12 befindliche Fritierfett ab und bringen dieses auf die gewünschte Betriebstemperatur. Aufgrund physikalischer Gesetze strömt dabei das heiße Fritierfett in diesen beiden Zwischenräumen 12 nach oben, wie dies durch die Pfeile angedeutet ist. Gleichzeitig entsteht im Behälter 1 ganz unten im Bereich des Rundbogens 9 eine Art Sog, welcher Fritierfett aus der Fritierzone 5 durch das Innere 13 des Einsatzes 10 hindurch ansaugt. Es entsteht dadurch eine Zirkulation des Fritierfetts, wobei nach dem Austritt des erhitzten Fritierfetts oben aus den Zwischenräumen 12 die Fritierzone 5 im Bereich des Aufbewahrungsbehälters 6 für das Fritiergut durchströmt wird.

Während des Nachuntenströmens des Fritierfetts durch das Innere 13 des Einsatzes 10 durchströmt es die Siebe 15, so daß in dem Fritierfett befindliche Überreste ausgefiltert werden und sich in den Sieben 15 sammeln. Gleichzeitig erfolgt auch für einen Teil des Fritierfetts eine schikanenartige Umlenkung um die versetzt zueinander angeordneten Siebe 15, so daß auch auf diese Weise in dem Frietierfett befindliche Überreste zurückgehalten werden und sich in den wannenförmigen Sieben 15 sammeln. Diese schikanenartige Umlenkung um die Siebe 15 herum wird insbesondere dann erfolgen, wenn die Siebe 15 bereits relativ stark mit Überresten zugesetzt sind.

Zur Reinigung der Friteuse wird nach Entfernen des Aufbewahrungsbehälters 6 für das Fritiergut der Einsatz 10 herausgenommen, da dieser als separates Bauteil ausgebildet ist. Nach Öffnen des Frontdeckels des Einsatzes 10 kann das ganze Element mit einer Schlauchbrause gereinigt oder aber zur Reinigung in eine Spülmaschine gestellt werden. Über ein bodenseitiges Auslaufrohr 18 des Behälters 1 kann das im Behälter 1 befindliche Fett abgelassen und dem Öltank 4 aufgegeben werden, der zu diesem Zweck zuvor dem Staufach 3 entnommen worden ist, wie dies in Fig. 1 angedeutet ist. Da die Wände des Behälters 1 allesamt glatt sind, können sie ohne große Probleme gereinigt werden. Nach erfolgter Reinigung der gesamten Friteuse kann das Fritierfett wieder mittels einer Pumpe 19 über eine Rücklaufleitung 20 im Behälter 1 aufgegeben werden, wie dies ebenfalls in Fig. 1 angedeutet ist.

Zum Beheizen der Seitenwände 8 kann auch eine Gasheizung verwendet werden. Hierzu ist es lediglich erforderlich, die Heizrohre 16 durch einen Gasbrenner mit entsprechender Infrarotwirkung zu ersetzen.

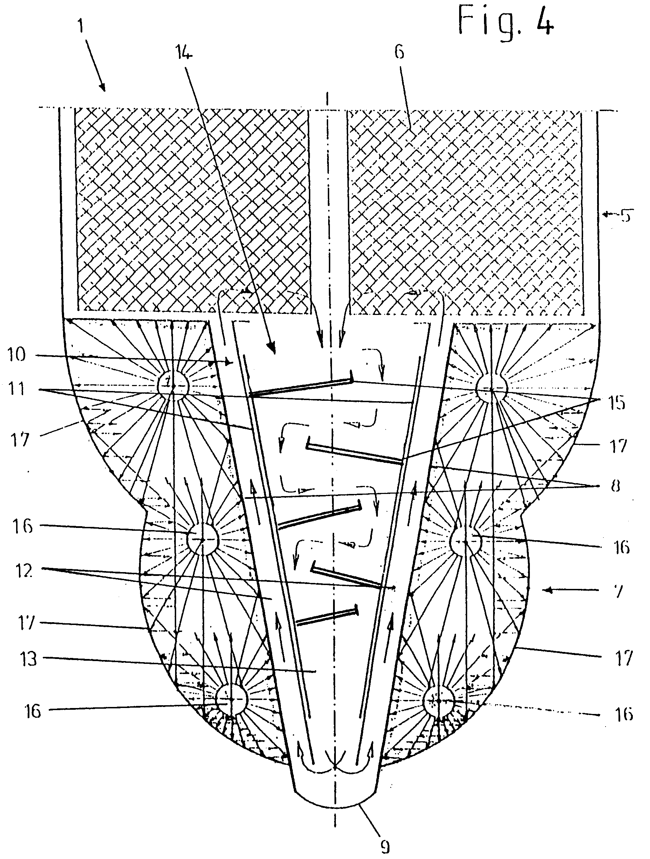

In Fig. 4 ist eine etwas modifizierte Ausführungsform dargestellt. Bei dieser sind die Siebe 15 nicht wannenförmig, sondern vielmehr eben ausgebildet. Bezüglich der Horizontalen sind sie zu der zugehörigen Seitenwand 8 etwas nach unten geneigt, so daß sich ebenfalls gewissermaßen zwischen dieser Seitenwand 8 und dem ebenen Sieb 15 eine Art Rinne ergibt, in der sich die Überreste im unteren Bereich sammeln. Ansonsten ist die Funktions- und Wirkungsweise dieser etwas modifizierten Ausführungsform gleich der ersten Ausführungsform mit den wannenartigen Sieben 15.

### Bezugszeichenliste

- 1: Behälter
- 2: Installationsfach
- 3: Staufach
- 4: Öltank
- 5: Fritierzone
- 6: Aufbewahrungsbehälter
- 7: Heiz- und Umwälzzone
- 8: Seitenwand
- 9: Rundbogen
- 10: Einsatz
- 11: Seitenwand
- 12: Zwischenraum
- 13: Innere des Einsatzes
- 14: Filtereinrichtung
- 15: Sieb
- 16: Heizrohr
- 17: Reflektor
- 18: Auslaufrohr
- 19: Pumpe
- 20: Rücklaufleitung

## Patentansprüche

1. Friteuse
mit einem Behälter (1) für das Fritierfett, in den von oben ein Aufbewahrungsbehälter (6) für das Fritiergut einsetzbar ist,
sowie mit einem in dem Behälter (1) angeordneten, sowohl oben als auch unten offenen Einsatz (10), der zwischen seinen beiden Seitenwänden (11) und den gegenüberliegenden, beheizten Seitenwänden (8) des Behälters (1) jeweils einen Zwischenraum derart definiert, daß das Fritierfett in einer Zirkulationsbewegung in den beiden äußeren Zwischenräumen (12) hochströmt sowie anschließend durch das Innere (13) des Einsatzes (10) wieder abwärtsströmt, und dem eine Filtereinrichtung (14) mit Sieb (15) zum Filtrieren des durchströmenden Fritierfetts zugeordnet ist,
**dadurch gekennzeichnet**,
daß die Filtereinrichtung (14) innerhalb des Einsatzes (10) angeordnet ist und aus mehreren in Strömungsrichtung schikanenförmig hintereinander angeordneten Sieben (15) besteht.

2. Friteuse nach Anspruch 1,
dadurch gekennzeichnet,
daß die Siebe (15) rinnenförmig ausgebildet sind.

3. Friteuse nach Anspruch 1,
dadurch gekennzeichnet,
daß die Siebe (15) eben ausgebildet und insbesondere dabei bezüglich der Horizontalen zur Seitenwand (8) hin nach unten geneigt sind.

4. Friteuse nach einem der Ansprüche 1 bis 3,
dadurch gekennzeichnet,
daß der Einsatz (10) mit der Filtereinrichtung (14) als separates Bauteil in den Behälter (1) einsetzbar und herausnehmbar ist.

5. Friteuse nach einem der Ansprüche 1 bis 4,
dadurch gekennzeichnet, daß der Behälter (1) im Bereich des Einsatzes (10) V-förmig oder U-förmig ausgebildet ist.

6. Friteuse nach einem der Ansprüche 1 bis 5,
dadurch gekennzeichnet,
daß der Behälter (1) einen rechteckigen oder einen runden Querschnitt aufweist.

7. Friteuse nach einem der Ansprüche 1 bis 6,
dadurch gekennzeichnet,
daß zum berühungslosen Beheizen der beiden Seitenwände (8) des Behälters (1) von außen Infrarotstrhlung verwendet wird, welche von den Seitenwänden (8) unter Wärmeerzeugung absorbiert wird.

8. Friteuse nach Anspruch 7,
dadurch gekennzeichnet,
daß zur Erzeugung der Infrarotstrahlung Infrarotlampen, Heizrohre oder Gasbrenner vorgesehen sind.

9. Friteuse nach Anspruch 7 oder 8,
dadurch gekennzeichnet,
daß die Außenseiten der Seitenwände (8) des Behälters (1) geschwärzt sind.

10. Friteuse nach einem der Ansprüche 7 bis 9,
dadurch gekennzeichnet,
daß Reflektoren (17) zum Reflektieren der ausgesandten Infrarotstrahlung hin zu den Seitenwänden (8) des Behälters (1) vorgesehen sind.

11. Friteuse nach einem der Ansprüche 1 bis 6,
dadurch gekennzeichnet,
daß zum Beheizen der beiden Seitenwände (8) des Behälters (1) Heizmatten vorgesehen sind.

## Claims

1. A fryer
with a container (1) for the fat for frying into which a storage container (6) for the goods to be fried may be inserted from above,
as well as an insert (10) arranged in the container (1), which insert is open both at the top and at the bottom and which defines a respective intermediate space between its two side walls (11) and the opposite, heated side walls (8) of the container (1) in such a manner that in its circulating movement the frying fat streams upwardly in the two outer intermediate spaces (12) as well as thereafter streams downwardly again through the interior (13) of the insert (10), and a filtering device (14) with a sieve (15) is associated therewith for filtering the frying fat that flows through,
characterised in that,
the filtering device (14) is arranged within the insert (10) and consists of a plurality of sieves (15) arranged in the manner of baffle plates one behind the other in the direction of flow.

2. A fryer according to claim 1
characterised in that,
the sieves (15) are formed as channels.

3. A fryer according to claim 1
characterised in that,
the sieves (15) are formed planarly and in particular are inclined downwardly relative to the horizontal towards the side wall (8).

4. A fryer according to any of claims 1 to 3,
characterised in that,
the insert (10) with the filtering device (14) is insertable into and removable from the container (1) as a separate component.

5. A fryer according to any of claims 1 to 4,
characterised in that,
in the region of the insert (10) the container is made V-shaped or U-shaped.

6. A fryer according to claim 5,
characterised in that,
the container (1) has a rectangular or circular cross-section.

7. A fryer according to claim 6,
characterised in that,
for the contactless heating of the two side walls (8) of the container (1) from the outside, infrared radiation is used which will be absorbed by the side walls (8) under the production of heat.

8. A fryer according to claim 7,
characterised in that,
infrared lamps, heating tubes or gas burners are provided to produce the infrared radiation.

9. A fryer according to claim 7 or 8,
characterised in that,
the outsides of the side walls (8) of the container (1) are blacked.

10. A fryer according to any of claims 7 to 9,
characterised in that,
reflectors (17) are provided to reflect the emitted infrared radiation toward the side walls (8) of the container (1).

11. A fryer according to claim 6,
characterised in that,
heating mats are provided for heating the two side walls (8) of the container (1).

## Revendications

1. Friteuse,
avec un récipient (1) pour la graisse de friture, dans lequel on peut introduire par le haut un récipient d'entreposage (6) pour le produit à frire,
et avec un élément rapporté (10) disposé dans le récipient (1) et ouvert tant vers le haut que vers le bas, l'élément rapporté (10) définissant, entre ses deux parois latérales (11) et les parois latérales en vis-à-vis, chauffées (8) du récipient (1), un espace intermédiaire respectif de telle sorte que la graisse de friture, en un mouvement de circulation, s'écoule vers le haut dans les deux espaces intermédiaires extérieurs (12) puis s'écoule à nouveau vers le bas à travers l'intérieur (13) de l'élément rapporté (10), et un dispositif de filtration (14) à tamis (15) étant associé à l'élément rapporté (10) afin de filtrer la graisse de friture qui s'écoule à travers lui,
**caractérisée** en ce que le dispositif de filtration (14) est disposé à l'intérieur de l'élément rapporté (10) et est constitué de plusieurs tamis (15) disposés les uns à la suite des autres en chicane dans la direction d'écoulement.

2. Friteuse selon la revendication 1, **caractérisée** en ce que les tamis (15) sont réalisés en forme de gouttières.

3. Friteuse selon la revendication 1, **caractérisée** en ce que les tamis (15) sont réalisés plats et sont alors notamment inclinés vers le bas, par rapport à l'horizontale, en direction de la paroi latérale (8).

4. Friteuse selon l'une des revendications 1 à 3, **caractérisée** en ce que l'élément rapporté (10) muni du dispositif de filtration (14) peut être installé dans le récipient (1), et en être enlevé, en tant que pièce séparée.

5. Friteuse selon l'une des revendications 1 à 4, **caractérisée** en ce que le récipient (1) est configuré en V ou en U dans la région de l'élément rapporté (10).

6. Friteuse selon l'une des revendications 1 à 5**, caractérisée** en ce que le récipient (1) présente une section rectangulaire ou ronde.

7. Friteuse selon l'une des revendications 1 à 6, **caractérisée** en ce qu'afin de chauffer sans contact par l'extérieur les deux parois latérales (8) du récipient (1), on utilise un rayonnement infrarouge qui est absorbé par les parois latérales (8) en produisant de la chaleur.

8. Friteuse selon la revendication 7, **caractérisée** en ce que des lampes à infrarouge, des tubes chauffants ou des brûleurs à gaz sont prévus pour produire le rayonnement infrarouge.

9. Friteuse selon la revendication 7 ou 8, **caractérisée** en ce que les faces extérieures des parois latérales (8) du récipient (1) sont noircies.

10. Friteuse selon l'une des revendications 7 à 9, **caractérisée** en ce que des réflecteurs (17) sont prévus pour réfléchir le rayonnement infrarouge émis en direction des parois latérales (8) du récipient (1).

11. Friteuse selon l'une des revendications 1 à 6, **caractérisée** en ce que des nattes chauffantes sont prévues pour chauffer les deux parois latérales (8) du récipient (1).
